# EUROPEAN PATENT APPLICATION

(11) **EP 2 327 839 A2**
(43) Date of publication of application: **01.06.2011**
(21) Application number: 10003136.8
(22) Date of filing: 24.03.2010
(51) Int. Cl.: E02B 17/02

(54) **A support leg and a mobile offshore work platform**

(30) Priority: 27.11.2009 CN 200910237987; 10.02.2010 CN 201010112156
(71) Applicant: Sany Electric Co., Ltd., Huilongguan Changping District Beijing 102206 (CN)
(72) Inventor: Wu, Jialiang, Huilongguan, Changping District, Beijing 102206 (CN); Wang, Xinming, Huilongguan, Changping District, Beijing 102206 (CN); Li, Yanlin, Huilongguan, Changping District, Beijing 102206 (CN); Bai, Junlei, Huilongguan, Changping District, Beijing 102206 (CN)
(74) Representative: Torggler, Paul Norbert

(57) **Abstract**

The present invention discloses a support leg (200) and a mobile offshore work platform (100) having that leg. The disclosed support leg for a mobile offshore work platform comprises a support arm (210) extending in a vertical direction, and is different from the prior art in that the support leg further comprises a support platform (220), that said support platform (220) has a cross section larger than that of the support arm (210), and that the lower end of said support arm (210) is fixed to the upper surface of the support platform (220); and in a preferred technical solution, said support platform comprises a cavity having an opening located on the lower surface of the support platform. When wind turbine installations or other offshore works are carried in predetermined sea areas of soft foundation ground, the support platform with relatively large cross section thus is supported on a soft foundation ground by a larger area, so that a greater support force can be provided for the platform, the stability of the mobile offshore work platform is improved, and the mobile offshore work platform can be used to complete wind turbine installations and other predetermined works in sea areas of soft foundation ground.

## Description

### Technical Field

This invention relates to an offshore work platform technology, and particularly, to a support leg for a mobile offshore work platform and a mobile offshore work platform having the support leg.

### Background Art

Offshore wind power generation technology concerns transformation of wind energy into electrical energy by means of one or more wind turbines installed in a wind farm located in an appropriate sea area. A wind turbine generally comprises a tower, a wind rotor and a nacelle, wherein the nacelle is provided with a generator, a gearbox and a main shaft. The bottom of the tower is installed to the wind turbine foundation of the wind farm, and the wind rotor and the nacelle are installed at the top of the wind turbine tower. The wind rotor which is rotatable under the action of wind drives the power generator in the nacelle to generate electrical energy and thereby the transformation of wind energy into electrical energy is achieved.

Generally speaking, each part of the wind turbine is heavy. For example, the total weight of the nacelle of the wind turbine is up to 300 tons. Those relatively large parts such as the gearbox, the generator inside the nacelle each may have a weight up to 60 tons in variety. As a result, it has become an important part for offshore wind farm construction to install the wind turbine at a predetermined sea area.

Currently, there are two alternative solutions for installing a wind turbine:

One is to install the wind turbine as a whole: i.e., after the whole wind turbine is assembled in a harbor, the wind turbine as a whole is transported to a predetermined sea area by a carrying ship, and then is lifted and mounted by using a large crane ship. Because at present there is no large crane ship specifically designed to install a wind turbine, therefore, during the hoisting and mounting of a whole wind turbine, different hoisting and mounting processes need to be planned according to different wind turbines and different conditions of the predetermined sea area configurations, which makes the installation process very complicated. Further, the cost for using or renting a large crane ship is quite high, which thus results in the expense increment of the installation of a wind turbine. Furthermore, the large crane ship has the characteristic of a deeper draft, so that the large crane ship can not be used to perform the hoisting and mounting work in tidal flats and shallow sea areas, and the application of this manner is limited by the installation areas.

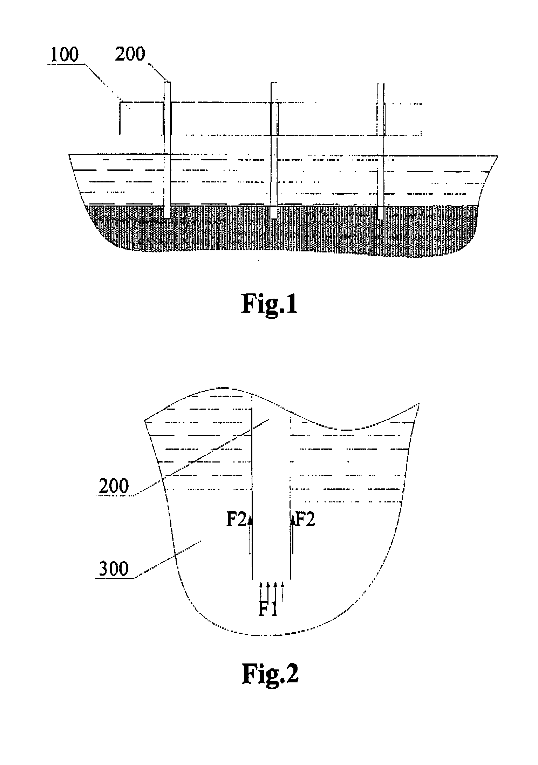

The other is to install the wind turbine in disassembling manner: i.e., the wind turbine is disassembled into many parts, and the many parts are transported to a predetermined sea area by a carrying ship; in the predetermined sea area, by using a mobile offshore work platform as a base, the various parts of the wind turbine are lifted and assembled at site to complete its installation. Please refer to Fig. 1, which is a schematic diagram of the structure of a typical mobile offshore work platform provided in the prior art. The existing mobile offshore work platform comprises a platform body 100, and a plurality of support legs 200. The plurality of support legs 200 are respectively located at the periphery of the platform body 100 and are respectively slidably connected with the platform body 100, and between the support legs 200 and the platform body 100 there are provided suitable lifting mechanisms to drive the support legs 200 to slide in vertical direction relative to the platform body 100. When the mounting work of the wind turbine is performed on the sea, the support legs 200 are extended downward to reach directly to the sea floor and to be piled into the sea floor foundation ground, so as to realize the positioning of the platform body 100, to make the mobile offshore work platform capable of keeping stable, and to provide a base for the hoist device on the platform body 100 to smoothly perform the hoisting and mounting work. Although this solution can compensate for the defects existing in the former solution, there are also some problems in it.

Please refer to Fig. 2, which is a principle diagram of the forces acted when the support leg of the mobile offshore work platform in the prior art is supported on the sea floor foundation ground. When the foundation ground in the work sea area is soft foundation ground, the support leg 200 will sink into the soft foundation ground 300, and the soft foundation ground 300 creates two forces acting on the lower end of the support leg 200: one force is a support force F1 against the bottom surface of the support leg 200, and the other is a friction force F2 against the side surface of the support leg 200; and the sum of the support force F1 and the friction force F2 is the support force which the support leg 200 can provide for the platform body 100. Since the soft foundation ground 300 has fluidity, the foundation ground particles located under the support leg 200, when being subjected to the action force of the support leg 200, will flow toward the surrounding, and at this time, the soft foundation ground 300 fails to create a great action force against the bottom surface of the support leg 200, so as to make the support force F1 relatively small; based on the same reason, the fluidity of the soft foundation ground 300 also greatly limits the friction force F2, and therefore, it is difficult for the support leg 200 to provide a great support force for the platform body 100 when there is soft foundation ground in the work sea area; and further, the members of the wind turbine can not be hoisted and mounted by the hoist device on the mobile offshore work platform, and it is difficult to complete the installation of the wind turbine in a sea area of soft foundation ground. In addition, when the support leg 200 is pulled out of the soft foundation ground 300, the friction force F2 will act on the support leg 200 in a reverse direction to make it difficult to pull the support leg 200 out of the soft foundation ground 300, thereby causing difficulty of the transfer of the mobile offshore work platform among farms.

In theory, although F2 can be increased by increasing the lengths of the support legs 200 to increase the contact areas of the support legs 200 with the soft foundation ground 300, or the support force F1 can be increased by causing the bottoms of the support legs 200 to extend directly to a harder foundation ground, this actually can not be implemented, due to the reason that not only the contour size of the mobile offshore work platform is increased to increase the costs of manufacture and use but also the greater friction force F2 would make it difficult to pull the support leg 200 out of the soft foundation ground 300 to cause the failure of the transfer of the mobile offshore work platform between farms.

The previously mentioned problems existing in mobile offshore work platforms exist not only in the installation process of a wind turbine, but also in other offshore work processes (including the work processes in beach areas of land-water interfaced areas of continental rivers, continental lakes, marsh lands or the like).

### Summary of the Invention

As for the problems described above, the technical problem solved by the present invention is to provide a support leg for a mobile offshore work platform, which support leg can provide a great support force for a platform body on a soft foundation ground.

Based on the provision of the support leg provides mentioned above, there is further provided a mobile offshore work platform having the above mentioned support leg, so as to improve the operation stability of the mobile offshore work platform.

The present invention provides a support leg for mobile offshore work platforms, which comprises a support arm extending in a vertical direction, characterized by that it further comprises a support platform, that said support platform has a cross section area larger than that of the support arm, and that the lower end of said support arm is fixed to the upper surface of the support platform.

The present invention further provides a mobile offshore work platform, which, according to its basic solution, comprises a platform body extending transversely and a plurality of support legs, characterized by that said support legs are the support legs as mentioned above, and that the support arms of said support legs are vertically slidably mounted to the platform body.

Compared with the prior art, the support leg for mobile offshore work platforms which is provided by the present invention, in addition to the support arm extending in a vertical direction, further comprises the support platform fixed to the lower end of the support arm, and the cross section area of the support platform is larger than that of the support arm; and as such, when wind turbine installations or other offshore works are carried out in predetermined sea areas of soft foundation ground, the support platform with relatively large cross section area thus is supported on a soft foundation ground by a larger area, so that a greater support force can be provided for the platform body, the stability of the mobile offshore work platform is improved, and the mobile offshore work platform can be used to complete wind turbine installations and other predetermined works in sea areas of soft foundation ground. At same time, since the support platform is located at the lower end of the support arm, the support arm may be made to have a smaller cross section area, the support leg thus remains to have a relatively light total weight.

In a further preferred technical solution of the support leg of the present invention, said support platform comprises a cavity having an opening located on the lower surface of the support platform. As such, when the support leg needs to be sunk to the sea floor and supported on the soft foundation ground, the cavity may be depressurized by using a filling and expelling pump, so that a negative pressure region will be created in the cavity, the air and water in the cavity are expelled out, the support platform of the support leg can be smoothly sunk into sea water, the particles of the soft foundation ground are flowed into the cavity, the support platform is deposited into the soft foundation ground, and the support leg can provide a support force for the platform body. When the support leg needs to be raised, the filling and expelling pump can be used to increase the pressure in the cavity, to fill water or air into the cavity, to create a positive region inside the cavity, to detach the support platform from the soft foundation ground under action of the pressure of the water or air, and to pull out the support leg from the soft foundation ground smoothly, so as to facilitate the farm-transfer of the mobile offshore work platform.

In another further preferred technical solution of the support leg of the present invention, said support platform further has a filling and expelling passage having an external port located on the outer surface of the support platform and an internal port located on the wall surface of the cavity. In this technical solution, the filling and expelling pump can be connected with the cavity through the filling and expelling passage to facilitate the pressure increment and reduction of the cavity.

In an alternative technical solution of the support leg of the present invention, the external port of said filling and expelling passage is located on the outer surface of the support arm, and as such, a suitable filling and expelling pump may be provided on the platform body, by which the pressure increment and reduction of the cavity are realized to create a negative or positive region inside the cavity. At same time, the internal port is located on the upper wall surface of the cavity, and as such, when the support leg is sunk downward, the air and water inside the cavity can be expelled out more clearly; and when the support leg is raised upward, air and/or water can be filled into the cavity from its upper portion to make the support leg rise upward more smoothly.

In another technical solution, said filling and expelling passage has a plurality of external ports, which are located on the side surface of the support arm and have different distances from the upper end of the support arm. As such, when the pressure in the cavity is increased and reduced, the filling and expelling pump is connected with a suitable one of the external ports on the support arm according to actual requirements, so as to facilitate the connection between the filling and expelling pump and external ports.

Based on the above mentioned support leg as provided, the provided mobile offshore work platform having the above mentioned support leg also has corresponding technical effects.

The first preferred solution of the mobile offshore work platform of the present invention is an improvement on the basic solution of the mobile offshore work platform of the present invention. In the first preferred solution, said support platform comprises a cavity having an opening located on the bottom surface of the support platform; and the offshore work platform further comprises a filling and expelling pump communicating with said cavity through a pipe.

The second preferred solution of the mobile offshore work platform of the present invention is a further improvement on the first preferred solution. In this improved solution, said support leg further has a filling and expelling passage, an external port of which is located on the outer surface of the support platform, and an internal port of which is located on the wall surface of the cavity; and said filling and expelling pump is communicated with the external port of the filing and expelling passage.

The third preferred solution of the mobile offshore work platform of the present invention is a further improvement on the first preferred solution. In this improved solution, there is further a filling and expelling passage, an external port of which is located on the outer surface of the support arm, and an internal port of which is located on the upper wall surface of the cavity; and said filling and expelling pump is communicated with the external port of the filling and expelling passage.

The fourth preferred solution of the mobile offshore work platform of the present invention is a further improvement on the basis of the third preferred solution. In this improvement, said filling and expelling passage has a plurality of external ports located on the side surface of the support arm, said plurality of external ports having different distances from the upper end of the support arm.

The fifth preferred solution of the mobile offshore work platform of the present invention is a further improvement to the basic solution. In this improvement, two or more draft adjusting devices are provided on side surface of said platform body, which draft adjusting devices are arranged symmetrically.

The sixth preferred solution of the mobile offshore work platform of the present invention is a further improvement on the basis of the fifth preferred solution. In this improvement, said draft adjusting device comprises: a air bag for adjusting the waterplane area of said platform body; a air inflating system for controlling the inflation and deflation of said air bag; a extendable and retractable mechanism connected with said air bag, for controlling the extension and retraction of said air bag; and a fixing seat for fixing said extendable and retractable mechanism to said platform body.

The seventh preferred solution of the mobile offshore work platform of the present invention is a further improvement on the sixth preferred solution. In this improvement, the mobile offshore work further comprises an operating and controlling device for said extendable and retractable mechanism which is one of an oil cylinder, a pneumatic cylinder or an electric push rod; said extendable and retractable mechanism comprises a plurality of extendable and retractable units connected successively; and said extendable and retractable units are extendable and retractable sections, which are in a form of a parallelogram four-bar linkage mechanism.

The eighth preferred solution of the mobile offshore work platform of the present invention is a further improvement on the basic solution. In this improvement, said platform body is provided with a power system to have its own navigating ability, or is not provided with a power system and instead can be trailed by a traction ship.

### Brief Description of the Drawings

Fig. 1 is a schematic diagram of the structure of a typical mobile offshore work platform provided in the prior art;
Fig. 2 is a principle diagram of the forces acted when the support leg of the mobile offshore work platform in the prior art is supported on the sea floor foundation ground;
Fig. 3 is a perspective structure view of a first embodiment of the support leg provided by the invention;
Fig. 4 is a longitudinal section structure view of a the first embodiment of the support leg provided by the invention;
Fig. 5 is a structure view of a first embodiment of a mobile offshore work platform provided by the invention, which mobile offshore work platform has the support legs provided by the first embodiment of the support leg;
Fig. 6 is a schematic view of the positioned state of the first embodiment of a mobile offshore work platform;
Fig. 7 is a schematic view of another state of the first embodiment of a mobile offshore work platform;
Fig. 8 is a schematic view of a structure of a support leg provided by a second embodiment of the support leg according to the invention;
Fig. 9 is a schematic view of a structure of a support leg provided by a third embodiment of the support leg according to the invention;
Fig. 10 is a schematic view of a structure of a support leg provided by a fourth embodiment of the support leg according to the invention;
Fig. 11 is a structure view of a second embodiment of a mobile offshore work platform provided by the invention, which mobile offshore work platform has the support legs provided by the first embodiment of the support leg, and draft adjusting devices provided by the invention according to a specific embodiment;
Fig. 12 is a structure view of the specific embodiment of draft adjusting devices provided by the invention; and
Figs. 13a and 13b are schematic views of unfolded and folded states of a draft adjusting device provided by the invention according to the specific embodiment, respectively.

### Detailed Description of the Preferred Embodiment

The key idea of the present invention is to increase the area of the lower end surface of a support leg contacting with foundation ground, to increase the support force of the support leg by the sea floor foundation ground, and to greatly increase the support force provided by the support leg while the weight of the support leg is not changed much.

The technical solution provided by the present invention is described in detail below through the description of specific embodiments. In following, using the vertical direction as a reference, the longitudinal direction is a direction parallel to the vertical direction, and the transversal direction is a direction perpendicular to the vertical direction.

For the sake of clarity, a support leg and a mobile offshore work platform having that support leg are described together, and the individual description of each of both is omitted.

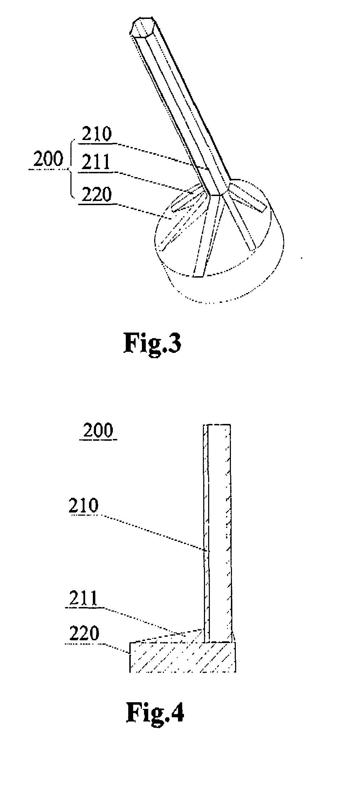

Please refer to Fig. 3 and Fig. 4, where Fig. 3 is a perspective structure view of a first embodiment of the support leg provided by the invention and Fig. 4 is a longitudinal section structure view of a the first embodiment of the support leg provided by the invention.

A support leg 200 according to the first embodiment of support leg comprises a support arm 210 and a support platform 220. In, this embodiment, the support arm 210 is formed by a hollow steel tube extending in a vertical direction, and the support platform 220 is a plate like body extending in a transversal direction and has a cross section larger than that of the support arm 210. A lower end of the support arm 210 is fixed to an upper surface of the support platform 220. For improving the reliability of fixation between them, between the side surface close to the lower end of the support arm 210 and the upper surface of the support platform 220 there is further provided a plurality of triangular reinforcing ribs 211, which have ends fixed to the side surface of the support arm 210 and bottom surfaces fixed to the support platform 220 and are disposed radially around and close to the lower end of the support arm 210. In addition, in order to facilitate the assembly of the support leg 200 with a platform body 100, the location at which the support arm 210 is connected with the support platform 220 departs from the central position of the support platform 220 and is deviated to one side thereof.

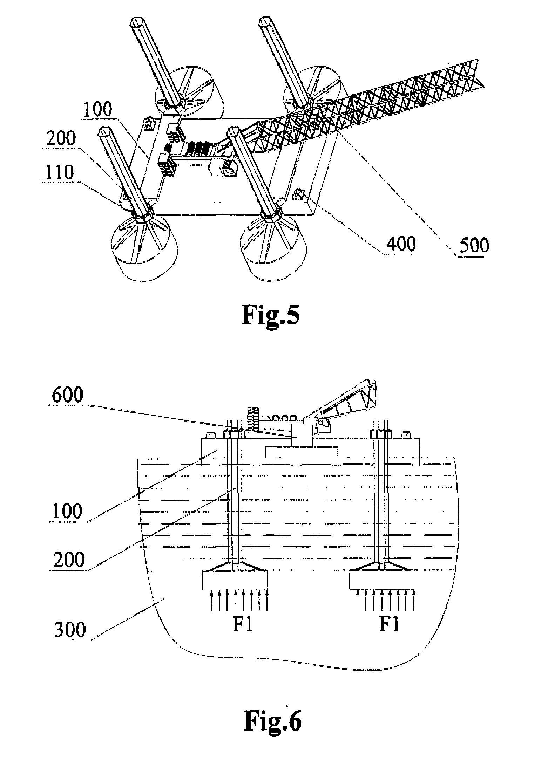

Please refer to Fig. 5, which is a structure view of a first embodiment of the mobile offshore work platform provided by the invention, which embodiment of mobile offshore work platform has the first embodiment of the support legs. The first embodiment of mobile offshore work platform comprises a platform body 100 extending transversely and a plurality of support legs 200. At the periphery of the platform body 100 there are provided a plurality of sliding bushes 110 extending outwardly, inside each of which there is provided a sliding track extending in the vertical direction. Each support arm 210 of the plurality of support legs 200 is fitted to the sliding track inside one sliding bush 110, and between the support arm 210 and the sliding bush 110 there is further provided a lifting mechanism (not shown in the figure), to drive the support arm 210 to slide in the vertical direction relative to the sliding bush 110 and to realize the rising and falling of the support leg 200. The sliding connection between the support arm 210 and the platform body 100 may be achieved in other manners, for example, a "T" sliding rail may be provided on the support arm 210 and a "T" sliding slot fitting with the sliding rail may be provided on the platform body 100, etc.

The lifting mechanism may be a hydraulic cylinder, two ends of which are respectively connected with the support arm and the sliding bush 110 so that the support arm 210 is driven to move in the vertical direction relative to the sliding bush 110 when the hydraulic cylinder is extended or retracted. The lifting mechanism may also be a worm gear and a worm which are cooperated with each other and are respectively fixed to the support arm 210 and the sliding bush 110, where the worm, when being rotated, may drive the worm gear to rotate, so as to drive the support arm 210 to move in the vertical direction relative to the sliding bush 110. And further, the lifting mechanism may be other structure in the prior art to drive the support legs 200 to slide relative to the sliding bush 110 (the platform body 100).

In the figure, on the mobile offshore work platform there are further provided an anchor windlass 400 and a hoisting device 500.

A process for positioning the mobile offshore work platform described above at a predetermined sea area is as follows:
1. The mobile offshore work platform is trailed, by its own power system or a suitable traction ship, to a predetermined sea area, which may be a wind turbine installation area of a predetermined offshore wind farm.

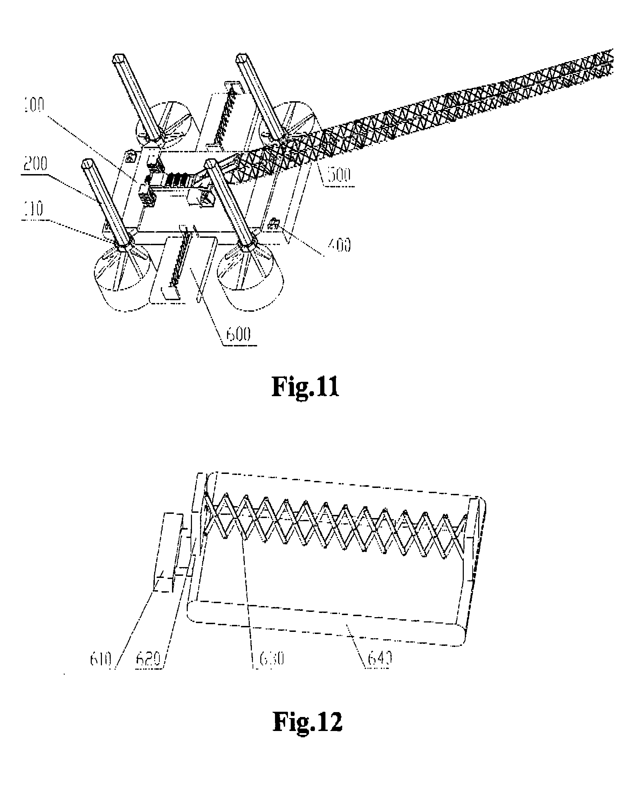

In order to make the platform adapt to different water depths, the first embodiment of the mobile offshore work platform may be further modified to form the second embodiment of the mobile offshore work platform. According to the second embodiment of the mobile offshore work platform, which is based on the first embodiment of the mobile offshore work platform, on two sides of the platform body 100 there are provided two or more draft adjusting devices 600, which are arranged symmetrically, as shown in Fig. 11.

According to one specific embodiment of the draft adjusting device, the draft adjusting device 600 comprises: a air bag 640 for adjusting the waterplane area of said platform body; a air inflating system 610 for controlling the inflation and deflation of said air bag; a extendable and retractable mechanism 630 connected with said air bag, for controlling the extension and retraction of said air bag; and a fixing seat 620 for fixing said extendable and retractable mechanism to said platform body, as shown in Fig. 12. The operating and controlling device of said extendable and retractable mechanism 630 may,be one of an oil cylinder, a pneumatic cylinder or an electric push rod; said extendable and retractable mechanism 630 comprises a plurality of extendable and retractable units connected successively; said extendable and retractable units are extendable and retractable sections, which are in a form of a parallelogram four-bar linkage mechanism.

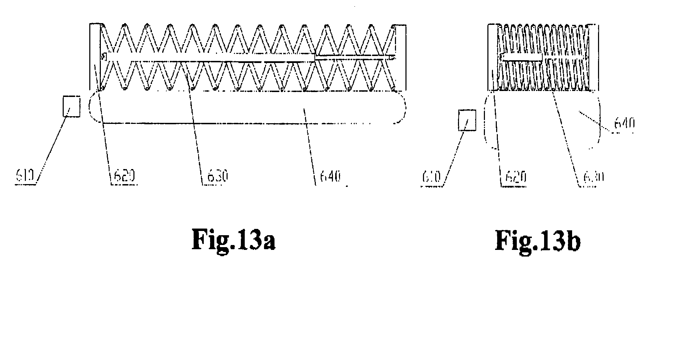

When the vessel is navigating in a normal sea area, the extendable and retractable mechanism 630 is retracted to keep the air bag 640 in a retracted and folded state (as shown in Fig. 13b), and the platform body 100 navigates in a normal draft; and at this time, the resistant force of navigation is reduced and the offshore work platform can navigate quickly. When the offshore work platform arrives at a shallow water area, the extendable and retractable mechanism 630 is extended, at the same time the air bag 640 is inflated (as shown in Fig. 13a) and contacts with water surface to become a pontoon to increase buoyancy; at this time, the buoyancy is great than the weight of the whole offshore work platform to move it upward until the buoyancy is equal to the weight of the platform; after being balanced, the waterplane area of the platform body 100 is larger and the draft is reduced correspondingly; and because the inflation controllability and operability of the air bag are very high and the range within which the waterplane area of the platform body 100 can be increased is extremely large, therefore, the draft of the vessel can be reduced to a extremely small range correspondingly, so as to meet the navigation requirements in inshore and shallow water areas.
2. When having arrived at the predetermined sea area, an anchoring barge is utilized to perform an anchor-cast operation and then the anchor windlass 400 is utilized to realize the initial position of the mobile offshore work platform through the way of winding the anchor.
3. The support legs 200 are extended downward to cause the support platforms 220 of the support legs 200 to be supported on the sea floor foundation ground. Please refer to Fig. 6, which is a schematic view of the positioned state of the mobile offshore work platform; in this state, the support platforms 220 having larger cross section area will acquire the support force of the foundation ground. When wind turbine installations or other offshore works are carried out in a predetermined sea area of soft foundation ground 300, the support platforms 220 having larger cross section area will be supported on the soft foundation ground 300 by a larger area; and under the co-action of a support force F1 and a friction force F2, the support legs 200 is enabled to provide a greater support force for the platform body 100, the stability and reliability of the mobile offshore work platform are improved, and this enables the mobile offshore work platform to be used to stably complete wind turbine installations or other predetermined works. At same time, because the support platform 220 is located at the lower end of the support arm 210, the support arm may remain to have a smaller cross section area, the support leg thus remains to have a lighter total weight.

In addition, due to the variety of configurations of the foundation grounds in sea areas, the bottom surface of the platform body 100 may be made to have a flat bottom structure, in order to improve the adaptability of the mobile offshore work platform; and as such, when a predetermined work is carried in a predetermined sea area of shallows or on tidal flats, the mobile offshore work platform can be stably positioned in a manner of seating on the tidal flats.

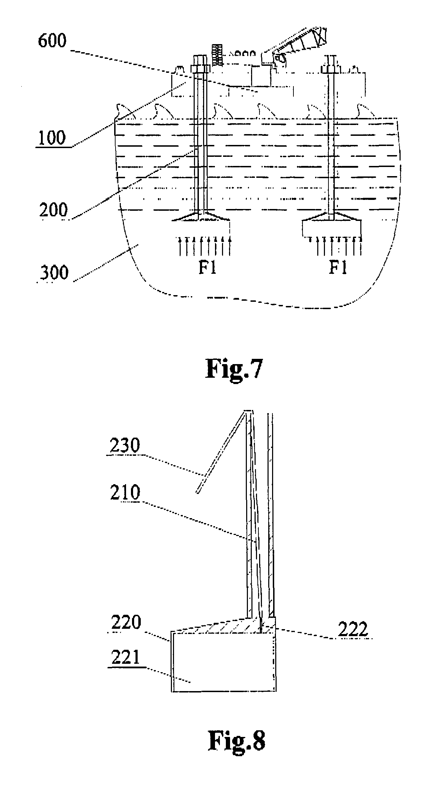

In order to adapt to the characteristics of variability of the offshore work environments, the operation state of the mobile offshore work platform provided by the present invention can also be adjusted according to changes of environments to adapt to different environments. When water is deep, wind and waves are light, and the mobile offshore work platform can not be seated on beaches, as shown in Fig.6, the support legs 200 can be supported on the sea floor foundation ground and a part of the platform body 100 can be located below water surface to make the platform body 100 in a semi-submerging state and to increase the load-carrying capacity of the mobile offshore work platform. When water is deep, wind and waves are heavy, and the sea water would cause heavy shocks to the platform body 100, as shown in Fig. 7 which is a schematic view of another state of the mobile offshore work platform, the platform body 100 can be moved upward relative to the support legs 200 by the lifting mechanism; and since the support legs 200 can provide large support force and the platform body 100 may be kept above the water surface, the shocks to the platform body 100 by sea waves can be avoided to keep the mobile offshore work platform to be positioned stably.

Although the support legs 200 provided by the first embodiment of support leg can offer large support force for the mobile offshore work platform to meet the requirements of wind turbine installations and other predetermined works performed thereon, the support legs 200 need to be pulled out from the sea floor foundation ground when the mobile offshore work platform is to be transferred from a wind farm to another; and in order to facilitate the support legs 200 to be detached from the sea floor foundation ground, particularly the soft foundation ground 300, the present invention further provides a support leg 200 of another structure.

Please refer to Fig. 8, which is a schematic view of a structure of a second embodiment of a support leg provided by the invention.

As compared with the support leg provided by the first embodiment of the support leg, one of differences of the support leg provided by the second embodiment is that the support platform 220 comprises a cavity 221 having an opening located on the bottom surface of the support platform 220.

The operation principle of the support leg 200 is as follows: when the support leg 200 needs to be sunk and supported on the sea floor foundation ground, by using a suitable filling and expelling pump to depressurize the cavity, the air and water in the cavity 221 are evacuated, a negative pressure is created inside the cavity 221, and the support leg is smoothly sunk and deposited on the sea floor foundation ground to provide a support force for the platform body 100; and after the predetermined offshore work has been finished, when the support leg 200 needs to be detached from the soft foundation ground 300, the filling and expelling pump can be used to increase the pressure in the cavity 221, to fill water or air into the cavity 221, to form gradually a positive pressure inside the cavity, to detach the support platform 220 from the soft foundation ground 300, and further to raise smoothly the support leg 200 upward.

The filling and expelling pump may be a vacuum pump, a centrifugal pump, and other pumps of other structures which can be used to expel out the water and /or air from the cavity 221 and fill water and /or into the cavity 221.

The specific manners for filling and expelling water and/or air may have various options, as shown in Fig. 8, and in this figure, at the upper portion of the cavity 221 there is provided a suitable hole as a filling and expelling passage 222 for expelling or filling water and/or air from or into the cavity 221; an external port of the filling and expelling passage 222 is located inside the support arm 210 at the lower end thereof, at this time, one end of a delivery pipe 230 is passed from the opening of the upper end of the support arm 210 and is passed through the internal chamber of the support arm 210 and is connected with the filling and expelling passage 222, the other end of the delivery pipe 230 is connected with a filling and expelling port of the filling and expelling pump located on the platform body 100. As such, when the filling and expelling pump is operated, the pressure of the cavity 221 can be increased or decreased to create positive or negative pressure in it, and the water and/or air can be expelled or filled from or into the cavity 221 to make the support leg 200 be raised or sunk smoothly.

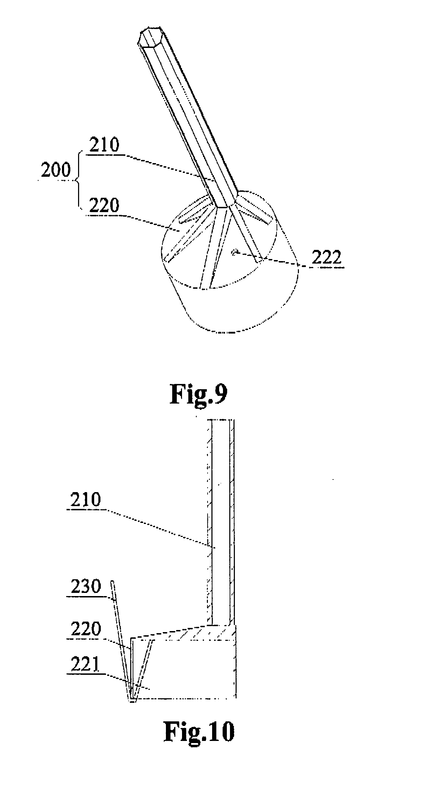

It can be understood that the purpose of the pressure increment and reduction of the cavity 221 can be realized as long as the external port of the filling and expelling passage 222 is located on the outer surface of the support platforms 220 and the internal port thereof is located at the wall of the cavity 221. Therefore, the external port of the filling and expelling passage 222 may also be located on the other portions of the outer surface of the support platforms 220; as shown in Fig. 9, which is a schematic view of a structure of a support leg according to a third embodiment of support leg according to the invention, at this time, the external port of the filling and expelling passage 222 is located between reinforcing ribs 211 on the upper surface of the support platforms 220, and as such, the filling and expelling passage 222 may also be connected with the filling and expelling pump provided on the platform body 100 through a delivery pipe 230; and in a case that predetermined conditions are satisfied, a filling and expelling pump may also be provided directly on the support platforms 220.

A preferred technical solution is as follows: the filling and expelling pump is provided on the platform body 100, at this time, in order to facilitate the connection between the filling and expelling pump and the filling and expelling passage 222, the filling and expelling passage may be made to further have a plurality of external ports, which are located on the side surface of the support arm and have different distances from the upper end of the support arm, for instance, the plurality of external ports may be arranged on the side surface of the support arm 210 in the vertical direction; and as such, in actual operations, a suitable one of the external ports may be selected to be connected with the filling and expelling pump and the others of the external ports are kept closed.

As for the internal port of the filling and expelling passage 222, in a preferred technical solution, the internal port is located on the upper wall surface of the cavity 221, and as such, when a negative pressure region is created inside the cavity 221, the water and/or air inside the cavity can be expelled out more completely, and when a positive pressure region is created inside the cavity 221, the foundation ground particles and/or water inside the cavity can be removed more completely.

In addition, in a particular case, it is possible to not provide the filling and expelling passage, as shown in Fig. 10, which is a schematic view of a structure of a support leg according to a fourth embodiment of support leg provided by the invention, where the purpose of the pressure increment and reduction of the cavity 221 may also be realized by passing the delivery pipe 230 by the bottom surface of the support platforms 220 into the cavity 221.

The above description is only the preferred embodiments, and it should be pointed out that for those skilled in the art, several modifications and alternations may further be made without departing from the principle of the invention, and that all the modifications and alternations should be considered as being in the scope of the invention..

## Claims

1. A support leg for mobile offshore work platforms, comprising a support arm extending in a vertical direction, **characterized by** that it further comprises a support platform, said support platform has a cross section area larger than that of the support arm, and the lower end of said support arm is fixed to the upper surface of the support platform.

2. The support leg according to claim 1, **characterized by** that said support platform comprises a cavity having an opening located on the bottom surface of the support platform.

3. The support leg according to claim 2, **characterized by** that it further has a filling and expelling passage having an external port located on the outer surface of the support platform and an internal port located on the wall surface of the cavity.

4. The support leg according to claim 2, **characterized by** that it further has a filling and expelling passage having an external port located on the outer surface of the support arm and an internal port located on the upper wall surface of the cavity.

5. The support leg according to claim 4, **characterized by** that said filling and expelling passage has a plurality of external ports, which are located on the side surface of the support arm and have different distances from the upper end of the support arm.

6. A mobile offshore work platform, comprising a platform body extending transversely and a plurality of support legs, **characterized by** that said support legs are the support legs according to claim 1, and the support arms of said support legs are vertically slidably mounted to the platform body.

7. The mobile offshore work platform according to claim 6, **characterized by** that said support platform comprises a cavity having an opening located on the bottom surface of the support platform; and the offshore work platform further comprises a filling and expelling pump communicating with said cavity through a pipe.

8. The mobile offshore work platform according to claim 7, **characterized by** that said support leg further has a filling and expelling passage, an external port of which is located on the outer surface of the support platform, and an internal port of which is located on the wall surface of the cavity; and said filling and expelling pump is communicated with the external port of the filling and expelling passage.

9. The mobile offshore work platform according to claim 7, **characterized by** that it further have a filling and expelling passage, an external port of which is located on the outer surface of the support arm, and an internal port of which is located on the upper wall surface of the cavity; and said filling and expelling pump is communicated with the external port of the filling and expelling passage.

10. The mobile offshore work platform according to claim 9, **characterized by** that said filling and expelling passage has a plurality of external ports located on the side surface of the support arm, said plurality of external ports having different distances from the upper end of the support arm.

11. The mobile offshore work platform according to claim 6, **characterized by** that two or more draft adjusting devices are provided on side surface of said platform body and are arranged symmetrically.

12. The mobile offshore work platform according to claim 11, **characterized by** that said draft adjusting device comprises: a air bag for adjusting the waterplane area of said platform body; a air inflating system for controlling the inflation and deflation of said air bag; a extendable and retractable mechanism connected with said air bag, for controlling the extension and retraction of said air bag; and a fixing seat for fixing said extendable and retractable mechanism to said platform body.

13. The mobile offshore work platform according to claim 12, **characterized by** that it further comprises an operating and controlling device for said extendable and retractable mechanism which is one of an oil cylinder, a pneumatic cylinder or an electric push rod; said extendable and retractable mechanism comprises a plurality of extendable and retractable units connected successively; and said extendable and retractable units are extendable and retractable sections, which are in a form of a parallelogram four-bar linkage mechanism.

14. The mobile offshore work platform according to claim 6, **characterized by** that said platform body is provided with a power system to have its own navigating ability, or is not provided with a power system and instead can be trailed by a traction ship.
